# EUROPEAN PATENT SPECIFICATION

(11) **EP 0 644 094 B1**
(45) Date of publication and mention of the grant of the patent: **26.11.1997**
(21) Application number: 94306676.1
(22) Date of filing: 12.09.1994
(51) Int. Cl.: B60T 13/24

(54) **Pneumatic booster**
Pneumatischer Bremskraftverstärker
Amplificateur pneumatique de force de freinage

(30) Priority: 20.09.1993 JP 257824/93
(43) Date of publication of application: 22.03.1995
(73) Proprietor: TOKICO LTD., Kawasaki-shi Kanagawa-ken (JP)
(72) Inventor: Amari, Yasuhiko, Kofu-shi, Yamanashi-ken (JP)
(74) Representative: Spall, Christopher John

(56) References cited:
- EP-A- 0 242 085
- EP-A- 0 475 794
- DE-A- 2 757 879
- DE-A- 3 812 452
- FR-A- 2 673 410
- FR-A- 2 676 413
- FR-A- 2 676 414
- US-A- 5 090 294
- US-A- 5 115 719
- US-E- R E28 191

## Description

The present invention relates to a pneumatic booster used in a brake system of a vehicle or the like. More particularly, the present invention relates to a pneumatic booster designed to output increased thrust force by introducing compressed air.

A conventional pneumatic booster of the type described above has a housing, a diaphragm dividing the inside of the housing into a negative pressure chamber and a working pressure chamber, and a hollow valve body that is supported by the diaphragm. The valve body is provided with a compressed air inlet port. In addition, a plunger is accommodated in the bore of the valve body so as to be axially slidable in association with an input shaft.

When force is applied to the input shaft, the plunger is moved forwardly, causing compressed air to be supplied to the working pressure chamber by the action of a valve device provided between the valve body and the plunger. Consequently, force is applied to the diaphragm, and thus booster action is obtained.

The plunger has a pair of seal members which are fitted thereon on the opposite sides of the compressed air inlet port in order to maintain airtightness between the plunger and the inner wall of the valve body. Accordingly, the conventional pneumatic booster suffers from the problem that when the plunger with the seal members fitted thereon is inserted into the bore of the valve body, the leading seal member may be damaged by the edge of the compressed air inlet port.

A booster of this kind is known from the Japanese Patent public disclosure No. 6 255 471.

The object of the present invention is to provide a pneumatic booster which is free from the above-described problem of the prior art.

To this end, in accordance with a first aspect of the present invention we provide a pneumatic booster including:
a housing,
a diaphragm dividing the inside of said housing into a negative pressure chamber and a working pressure chamber,
a hollow valve body supported by said diaphragm, said valve body having a negative pressure passage and a compressed air inlet port,
a plunger slidably fitted in a bore of said valve body through at least a pair of seal members so as to move in response to the movement of an input shaft, said seal members being axially spaced from each other and disposed on the opposite sides of said compressed air inlet port, and
a valve operable in response to the movement of said plunger to introduce compressed air into said working pressure chamber from said compressed air inlet port so as to produce a differential pressure between said working pressure chamber and said negative pressure chamber, thereby outputting boosted thrust through said valve body,
   characterised in that the bore of said valve body has a uniform diameter over at least a portion thereof where said plunger slides; and a groove is provided in an inner surface of the bore of said valve body, said groove including at least said compressed air inlet port.

In accordance with a second aspect, the valve body may be arranged such that at least a portion of the bore where the plunger slides is composed of a front bore portion having a relatively small diameter and a rear bore portion having a relatively large diameter so that the border between the small-diameter bore portion and the large-diameter bore portion lies slightly forwardly of the compressed air inlet port. In this case, a sleeve is fitted into the large-diameter bore portion. The sleeve has an inner diameter equal to the diameter of the small-diameter bore portion and is provided with a through-hole capable of communicating with the compressed air inlet port.
**Figure 1** is a sectional view showing the structure of an essential part of a pneumatic booster according to a first embodiment of the present invention;
**Figure 2** is an enlarged sectional view showing a part of the pneumatic booster shown in Figure 1;
**Figure 3** is a sectional view showing the structure of an essential part of a pneumatic booster according to a second embodiment of the present invention;
Fig. 4 is a sectional view showing the structure of an essential part of a pneumatic booster according to a third embodiment of the present invention;
Fig. 5 is a sectional view showing the whole structure of a conventional pneumatic booster;
Fig. 6 is an enlarged sectional view showing an essential part of the conventional pneumatic booster shown in Fig. 5;

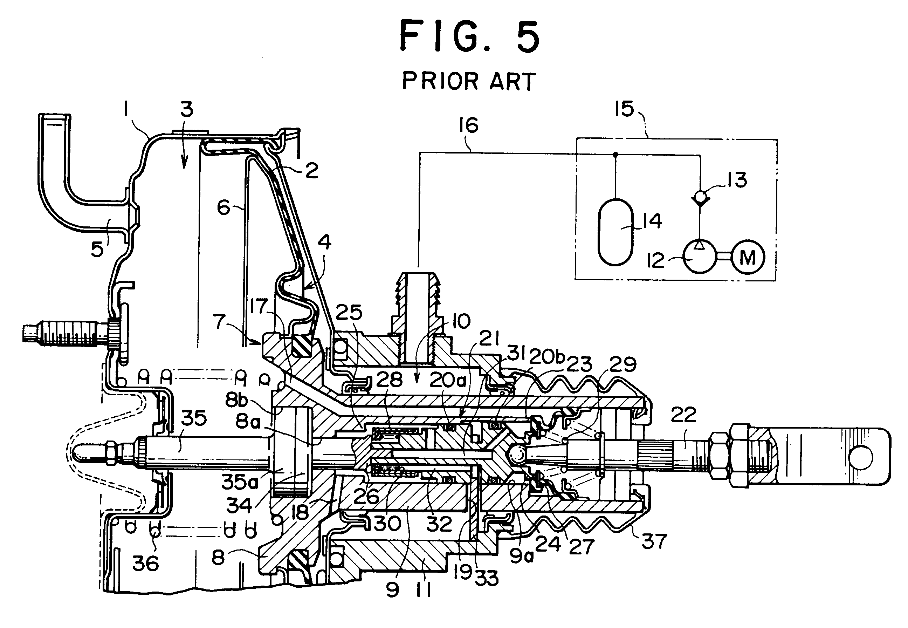

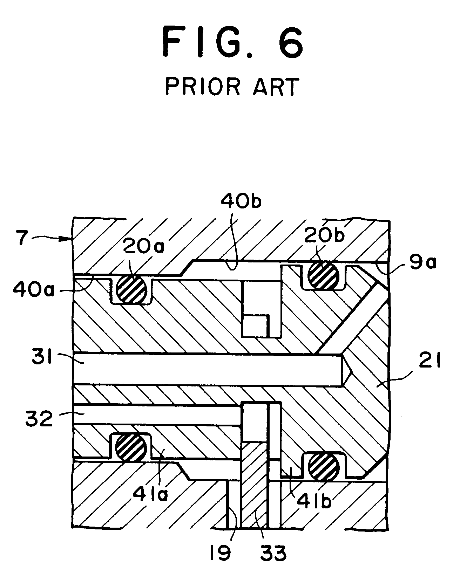

Prior to the description of the present invention, a prior art pneumatic booster will be explained with reference to Figs. 5 and 6 for the sake of even more accurate understanding of the present invention.

A conventional pneumatic booster has a structure such as that shown, for example, in Fig. 5. Referring to the figure, a housing 1 has a diaphragm 2 disposed therein to divide the inside thereof into a negative pressure chamber 3 and a working pressure chamber 4. The negative pressure chamber 3 is supplied with a negative pressure from an engine through an inlet port 5. A hollow valve body 7 is supported by the diaphragm 2 through a support plate 6. The valve body 7 is composed of a flange portion 8 and a tubular shaft portion 9. The flange portion 8 serves as a portion which is attached to both the diaphragm 2 and the support plate 6. The shaft portion 9 hermetically extends through the rear of the housing 1 as far as the outside thereof. A casing 11 is disposed around the shaft portion 9 projecting from the housing 1 to define a closed accumulator chamber 10 between the shaft portion 9 and the housing 1. The accumulator chamber 10 is supplied with compressed air through a pipe 16 from a pneumatic pressure source 15 which includes an air compressor 12, a check valve 13, and an air tank 14.

The valve body 7 is provided with a negative pressure passage 17, an air passage 18 and a compressed air inlet port 19 for providing communication between the bore 9a of the shaft portion 9 and the negative pressure chamber 3, the working pressure chamber 4 and the accumulator chamber 10, respectively. A plunger 21 is slidably fitted in the bore 9a of the shaft portion 9 of the valve body 7 through a pair of seal members 20a and 20b. The forward end portion of the plunger 21 is inserted into the bore 8a of the flange portion 8 of the valve body 7, while the rear end portion of the plunger 21 is connected to one end of an input shaft 22 which moves in response to the actuation of a brake pedal (not shown). First seat portions 23 and 24 are respectively formed on the inner surface of the valve body 7, including the opening edge of the negative pressure passage 17, and the rear end of the plunger 21. Further, second seat portions 25 and 26 are respectively formed on the inner surface of the valve body 7 in the vicinity of the air passage 18 and the outer periphery of the forward end of the plunger 21.

In the valve body 7 are disposed a first valve 27 capable of resting on and separating from the first seat portions 23 and 24, and a second valve 28 capable of resting on and separating from the second seat portions 25 and 26. The first valve 27 is secured at one end thereof to the inner surface of the shaft portion 9 of the valve body 7 and constantly biased by a first valve spring 29 in a direction in which the first valve 27 rests on the first seat portions 23 and 24. On the other hand, the second valve 28 is slidably fitted on the plunger 21 and constantly biased by a second valve spring 30 in a direction in which the second valve 28 rests on the second seat portions 25 and 26. In addition, the plunger 21 is provided with a first passage 31 which extends through the center from the rear end of the plunger 21 and which opens on the peripheral surface of the plunger 21 at a position immediately behind the second valve 28. The plunger 21 is further provided with a second passage 32 which extends through an off-center portion of the plunger 21 from a position corresponding to the compressed air inlet port 19 of the valve body 7 and which opens to the inside of the second valve 28.

It should be noted that a stopper 33 limits the slidable range of the plunger 21, and a reaction disk 34 is accommodated in a recess 8b communicated with the bore 8a of the flange portion 8 of the valve body 7. An output shaft 35 has the proximal end portion 35a thereof abutting on the reaction disk 34. A return spring 36 is provided for returning the valve body 7. A boot 37 covers the shaft portion 9 of the valve body 7.

In the above-described pneumatic booster, when the brake pedal is stepped on in the inoperative state shown in Fig. 5, the input shaft 22 moves forward, causing the plunger 21 to move forwardly, i.e., leftwardly as viewed in the figure. Consequently, the first seat portion 24 of the plunger 21 separates from the first valve 27, thereby allowing the air to be introduced into the working pressure chamber 4 through the first passage 31 of the plunger 21 and the air passage 18 of the valve body 7. As a result, a pressure difference is produced between the negative pressure chamber 3 supplied with the engine negative pressure and the working pressure chamber 4, and thus a forward thrust is applied to the diaphragm 2 and the support plate 6 and, therefore, to the valve body 7. The thrust is transmitted to a master cylinder (not shown) through the rubber reaction disk 34 and the output shaft 35 to initiate a boosting action.

When the brake pedal is further stepped on and hence the plunger 21 further moves forwardly, the second valve 28 rests on the second seat portion 25 of the valve body 7, thus cutting off the communication between the working pressure chamber 4 and the atmosphere. On the other hand, the second seat portion 26 of the plunger 21 separates from the second valve 28, thereby allowing the compressed air in the accumulator chamber 10 to be introduced into the working pressure chamber 4 through the compressed air inlet port 19 of the valve body 7, the second passage 32 of the plunger 21 and the air passage 18 of the valve body 7. As a result, the differential pressure between the negative pressure chamber 3 and the working pressure chamber 4 increases considerably, and thus a large forward thrust is applied to the valve body 7. It should be noted that when the brake pedal is released, the plunger 21 is moved backwardly by the force from the reaction disk 34, causing the second valve 28 and the first valve 27 to separate from the second seat portion 25 and the first seat portion 23, respectively, of the valve body 7 and rest on the second seat portion 26 and the first seat portion 24, respectively, of the plunger 21. As a result, the negative pressure in the negative pressure chamber 3 is introduced into the working pressure chamber 4 through the negative pressure passage 17, the first passage 31 of the plunger 21 and the air passage 18 of the valve body 7. Thus, the pressure difference between the two chambers 3 and 4 is canceled, and the thrust disappears.

Incidentally, in the above-described conventional pneumatic booster, when the plunger 21 is inserted into the valve body 7 during the assembly process, the front seal member 20a of the pair of seal members 20a and 20b, which have previously been fitted on the plunger 21, moves forwardly, passing the compressed air inlet port 19, which is provided in the valve body 7. Therefore, when passing the compressed air inlet port 19, the seal member 20a may be damaged or cut by the edge of the compressed air inlet port 19 unless special measures are taken.

To cope with this problem, measures have heretofore been taken as shown in Fig. 6. That is, the bore 9a of the shaft portion 9 of the valve body 7 is composed of a front small-diameter bore portion 40a and a rear large-diameter bore portion 40b, and the border between the small- and large-diameter bore portions 40a and 40b is set slightly forwardly of the compressed air inlet port 19. Meanwhile, the plunger 21 is composed of a small-diameter shaft portion 41a and a large-diameter shaft portion 41b in conformity to the small- and large-diameter bore portions 40a and 40b. With such measures, a gap is defined between the seal member 20a fitted on the plunger 21 and the inner surface of the large-diameter bore portion 40b of the valve body 7. Therefore, there is no possibility of the seal member 20a striking against the edge of the compressed air inlet port 19 during the assembly process. Thus, the occurrence of the above-described damage or cut can be prevented.

According to the above-described conventional scheme, however, the plunger 21 is composed of the small-and large-diameter shaft portions 41a and 41b in a portion in which they are subjected to the compressed air. This means that the pressure bearing area of the large-diameter shaft portion 41b is larger than that of the small-diameter shaft portion 41a in the area where the compressed air is introduced from the compressed air inlet port 19. Consequently, the plunger 21 is subjected to a force acting backwardly (rightwardly as viewed in the figure), resulting in increase of canceled input. In general, the pressure of compressed air supplied from the pneumatic pressure source 15 fluctuates in a predetermined range. Therefore, the value of the canceled input also varies with the pressure fluctuation, resulting in an unstable brake operation.

Accordingly, the object of the present invention is to provide a pneumatic booster which is improved in assembleability without increasing the canceled input.

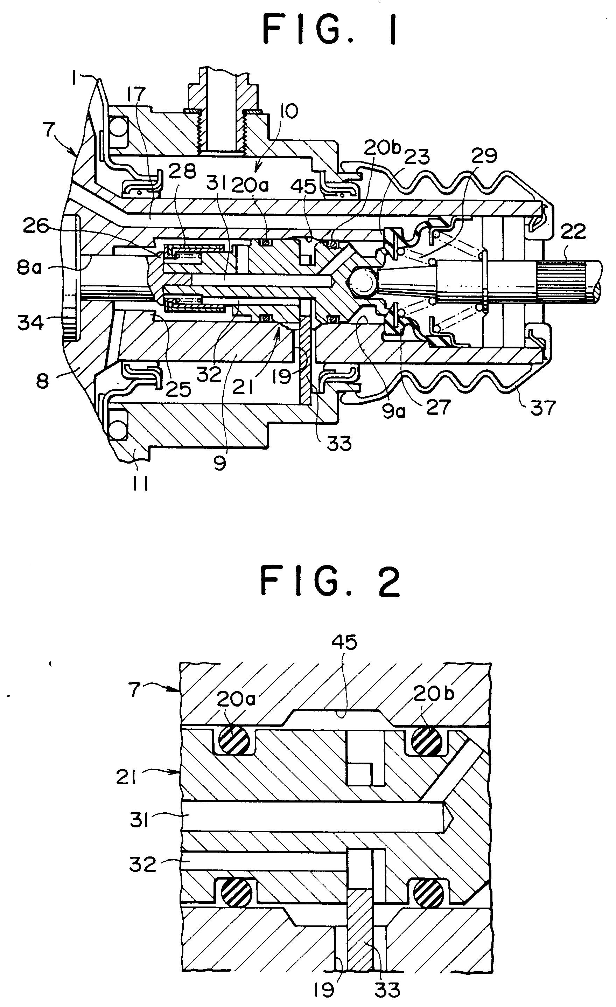

Embodiments of the present invention will be described below with reference to Figs. 1 to 4.

Figs. 1 and 2 show a first embodiment of the present invention. It should be noted that since the general structure of the pneumatic booster of this embodiment is the same as that of the prior art shown in Fig. 5, the same members or portions are denoted by the same reference numerals, and description thereof is omitted. In this embodiment, the bore 9a of the shaft portion 9 of the valve body 7 has a uniform diameter over at least a portion thereof where the plunger 21 slides, and the plunger 21 also has a uniform diameter over at least a portion thereof which is brought in sliding contact with the valve body 7. As is clearly shown in Fig. 2, an annular groove 45, which includes the compressed air inlet port 19, is provided in the inner surface of the bore 9a of the shaft portion 9 of the valve body 7. The depth of the annular groove 45 is so selected that when the plunger 21 is inserted into the valve body 7, a predetermined radial gap is defined between the seal member 20a and the bottom surface of the annular groove 45. The width of the annular groove 45 is selected so that the annular groove 45 lies outside the sliding ranges of the front and rear seal members 20a and 20b during the operation of the pneumatic booster.

In this embodiment, when the plunger 21 is inserted into the valve body 7, the front seal member 20a of the pair of seal members 20a and 20b, which have previously been fitted on the plunger 21, moves forwardly, passing the compressed air inlet port 19 of the valve body 7. The annular groove 45 serves to prevent the front seal member 20a from coming in contact with the edge of the compressed air inlet port 19 when passing it. As a result, damage to the front seal member 20a is prevented. Moreover, since the portion of the plunger 21 that is in sliding contact with the valve body 7 has a uniform diameter, no differential pressure acts between the two end portions of the plunger 21, which are forward and rearward of the compressed air inlet port 19, when compressed air is introduced from the compressed air inlet port 19. Accordingly, the introduction of compressed air does not increase canceled input, and fluctuation in pressure of the compressed air causes no variation of the canceled input. Consequently, the pneumatic booster of this embodiment can exhibit the boosting effect to the full, and the operation thereof is stabilized.

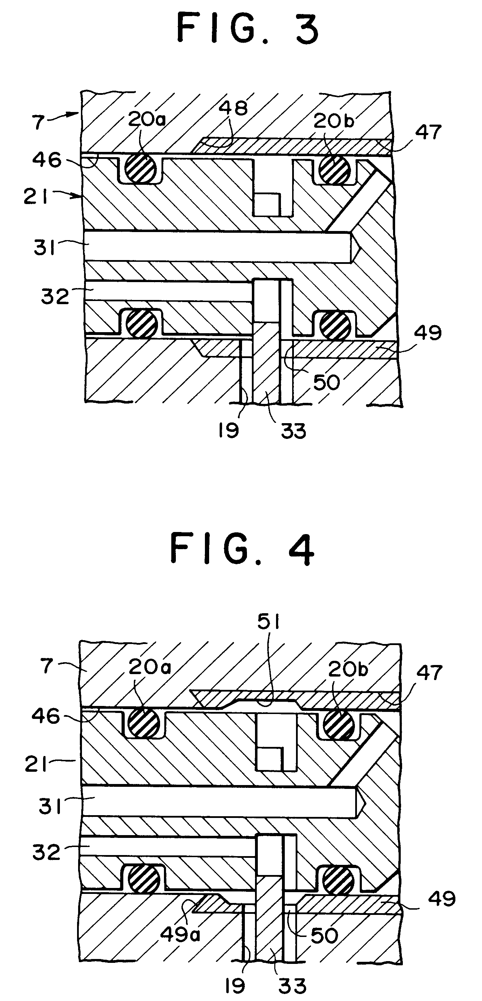

Fig. 3 shows a second embodiment of the present invention. Unlike the first embodiment, in which the bore 9a of the shaft portion 9 of the valve body 7 has a uniform diameter, the second embodiment is arranged such that at least the portion of the bore 9a where the plunger 21 slides is composed of a front bore portion 46 having a relatively small diameter and a rear bore portion 47 having a relatively large diameter. The border (i.e., the step portion) 48 between the two bore portions 46 and 47 is set slightly forwardly of the compressed air inlet port 19. In addition, a sleeve 49 having an inner diameter equal to the diameter of the small-diameter bore portion 46 is fitted into the large-diameter bore portion 47. The sleeve 49 is provided with a through-hole 50 capable of communicating with the compressed air inlet port 19.

In the second embodiment, the sleeve 49 is previously fitted on the plunger 21 so that the through-hole 50 of the sleeve 49 aligns with the second passage 32 of the plunger 21, and the plunger 21 is inserted into the valve body 7, together with the sleeve 49 as one unit. Consequently, there is no possibility of the front seal member 20a coming in contact with the through-hole 50 of the sleeve 49, not to mention the compressed air inlet port 19. Accordingly, damage to the seal member 20a is prevented in the same way as in the first embodiment. In addition, since the sleeve 49 has an inner diameter equal to the diameter of the small-diameter bore portion 46 of the valve body 7, the sealing properties of the rear seal member 20b are not impaired.

Fig. 4 shows a third embodiment of the present invention. The feature of this embodiment resides in that the inner surface of the above-described sleeve 49 is provided with an annular groove 51 which includes the through-hole 50, and that the forward end portion of the sleeve 49 is provided with a tapered surface 49a in which the diameter becomes larger as the distance from the rear end increases toward the forward end. According to the third embodiment, even if the plunger 21 is first inserted into the valve body 7 and then the sleeve 49 is inserted into the gap between the inner surface of the large-diameter bore portion 47 and the outer surface of the plunger 21, neither of the seal members 20a and 20b is damaged by the annular groove 51 or the tapered end surface 49a. Thus, the assembly operation is facilitated in comparison to the second embodiment.

It should be noted that the annular groove 45 in the first embodiment or the annular groove 51 in the third embodiment may be locally provided at a position which faces the compressed air inlet port 19 or the through-hole 50 of the sleeve 49. In other words, the annular groove 45 or 51 need not be continuous in the circumferential direction. Although the foregoing three embodiments show a pneumatic booster of the type in which two valves 27 and 28 are associated with the plunger 21 to successively introduce the air and compressed air into the working pressure chamber 4 (see Fig. 5), it should be noted that the present invention is not necessarily limited to this type of pneumatic booster but may also be applied to a pneumatic booster in which a single valve is actuated in response to the movement of the plunger 21 to introduce only compressed air into the working pressure chamber 4.

As has been detailed above, the pneumatic booster of the present invention enables the assembly process to be carried out without causing damage to a seal member and eliminates the occurrence of a differential pressure between the two end portions of the plunger 21, which are forward and rearward of the compressed air inlet port 19, when compressed air is introduced. Thus, the present invention contributes largely to the improvement in durability and reliability.

## Claims

1. A pneumatic booster including:
a housing (1),
a diaphragm (2) dividing the inside of said housing into a negative pressure chamber (3) and a working pressure chamber (4),
a hollow valve body (7) supported by said diaphragm (2), said valve body having a negative pressure passage (17) and a compressed air inlet port (19),
a plunger (21) slidably fitted in a bore (9a) of said valve body through at least a pair of seal members (20a,20b) so as to move in response to the movement of an input shaft (22), said seal members being axially spaced from each other and disposed on the opposite sides of said compressed air inlet port (19), and
a valve (28) operable in response to the movement of said plunger to introduce compressed air into said working pressure chamber (4) from said compressed air inlet port (19) so as to produce a differential pressure between said working pressure chamber (4) and said negative pressure chamber (3), thereby outputting boosted thrust through said valve body, (7),
characterised in that the bore of said valve body has a uniform diameter over at least a portion thereof where said plunger slides; and a groove (45) is provided in an inner surface of the bore of said valve body (7), said groove including at least said compressed air inlet port (19).

2. A pneumatic booster including:
a housing (1),
a diaphragm (2) dividing the inside of said housing into a negative pressure chamber and a working pressure chamber (4),
a hollow valve body (7) supported by said diaphragm (2), said valve body (7) having a negative pressure passage (17) and a compressed air inlet port (19),
a plunger (21) slidably fitted in a bore (9a) of said valve body through at least a pair of seal members (20a,20b) so as to move in response to the movement of an input shaft (22), said seal members being axially spaced from each other and disposed on the opposite sides of said compressed air inlet port (19), and
a valve (28) operable in response to the movement of a said plunger to introduce compressed air into said working pressure chamber (4) from said compressed air inlet port (19) so as to produce a differential pressure between said working pressure chamber (4) and said negative pressure chamber (3), thereby outputting boosted thrust through said valve body (7),
characterised in that said valve body (7) is arranged such that at least a portion of the bore (9a) where said plunger slides is composed of a front bore portion (46) having a relatively small diameter and a rear bore portion (47) having a relatively large diameter so that the border between said small-diameter bore portion and said large-diameter bore portion lies slightly forwardly of said compressed air inlet port (19); and
a sleeve (49) is fitted into said large-diameter bore portion (47), said sleeve having an inner diameter equal to the diameter of said small-diameter bore portion, said sleeve further having a through-hole (50) capable of communicating with said compressed air inlet port (19).

3. A pneumatic booster according to Claim 1 or Claim 2, characterised in that said plunger has a compressed air passage which is communicatable with said working pressure chamber through said valve and has an end opening at a place between said seal members.

## Patentansprüche

1. Pneumatischer Verstärker, umfassend:
ein Gehäuse (1),
eine Membran (2), die das Innere des Gehäuses in eine Unterdruckkammer (3) und eine Arbeitsdruckkammer (4) teilt,
einen hohlen Ventilkörper (7), der durch die Membran (2) getragen ist, wobei der Ventilkörper einen Unterdruckdurchlaß (17) und einen Drucklufteinlaßanschluß (19) aufweist,
einen Tauchkolben (21), gleitend in einer Bohrung (9a) des Ventilkörpers durch zumindest ein Paar Dichtelemente (20a, 20b) derart eingebracht, daß er sich in Abhängigkeit von der Bewegung einer Einlaßkolbenstange (22) bewegt und die Dichtelemente axial voneinander beabstandet und auf den gegenüberliegenden Seiten des Drucklufteinlaßanschlusses (19) angeordnet sind, und
ein Ventil (28), das in Abhängigkeit von der Bewegung des Tauchkolbens betreibbar ist, um Druckluft in die Arbeitsdruckkammer (4) von dem Drucklufteinlaßanschluß (19) einzubringen, um einen Druckunterschied zwischen der Arbeitsdruckkammer (4) und der Unterdruckkammer (3) zu erzeugen, wodurch durch den Ventilkörper (7) verstärker Antrieb ausgebracht wird,
dadurch gekennzeichnet, daß
die Bohrung des Ventilkörpers einen einheitlichen Durchmesser über zumindestens einen Abschnitt von ihr aufweist, wo der Tauchkolben gleitet; und eine Nut (45) in einer inneren Fläche der Bohrung des Ventilkörpers (7) vorgesehen ist, wobei die Nut zumindest den Drucklufteinlaßanschluß (19) umfasst.

2. Pneumatischer Verstärker, umfassend:
ein Gehäuse (1),
eine Membran (2), die das Innere des Gehäuses in eine Unterdruckkammer (3) und eine Arbeitsdruckkammer (4) teilt,
einen hohlen Ventilkörper (7), der durch die Membran (2) getragen ist, wobei der Ventilkörper einen Unterdruckdurchlaß (17) und einen Drucklufteinlaßanschluß (19) aufweist,
einen Tauchkolben (21), gleitend in einer Bohrung (9a) des Ventilkörpers durch zumindest ein Paar Dichtelemente (20a, 20b) derart eingebracht, daß er sich in Abhängigkeit von der Bewegung einer Einlaßkolbenstange (22) bewegt und die Dichtelemente axial voneinander beabstandet und auf den gegenüberliegenden Seiten des Drucklufteinlaßanschlusses (19) angeordnet sind, und
ein Ventil (28), das in Abhängigkeit von der Bewegung des Tauchkolbens betreibbar ist, um Druckluft in die Arbeitsdruckkammer (4) von dem Drucklufteinlaßanschluß (19) einzubringen, um einen Druckunterschied zwischen der Arbeitsdruckkammer (4) und der Unterdruckkammer (3) zu erzeugen, wodurch durch den Ventilkörper (7) verstärker Antrieb ausgebracht wird,
dadurch gekennzeichnet, daß
der Ventilkörper (7) derart angestaltet ist, daß zumindest ein Abschnitt der Bohrung (9a), wo der Tauchkolben gleitet, aus einem vorderen Bohrungsabschnitt (46), der einen relativ geringen Durchmesser aufweist und einem hinteren Bohrungsabschnitt (47), der einen relativ großen Durchmesser aufweist, derart gebildet ist, daß die Grenze zwischen dem Bohrungsabschnitt mit kleinem Durchmesser und dem Bohrungsabschnitt mit großem Durchmesser geringfügig vor dem Drucklufteinlaßanschluß (19) liegt; und
eine Muffe (45) in dem Bohrungsabschnitt (47) mit großem Durchmesser befestigt ist, wobei die Muffe einen Innendurchmesser gleich dem Durchmesser des Bohrungsabschnittes mit kleinem Durchmesser aufweist und zusätzlich ein Durchgangsloch (50) aufweist, das geeignet ist, mit dem Drucklufteinlaßanschluß (19) zu kommunizieren.

3. Pneumatischer Verstärker nach Anspruch 1 oder 2, dadurch gekennzeichnet, daß der Tauchkolben einen Druckluftdurchlaß aufweist, der durch das Ventil mit der Arbeitsdruckkammer kommunizierbar ist und eine Endöffnung in einer Position zwischen den Dichtelementen aufweist.

## Revendications

1. Amplificateur pneumatique comportant :
un boîtier (1),
une membrane (2) divisant l'intérieur dudit boîtier en une chambre de pression négative (3) et une chambre de pression de travail (4),
un corps de soupape creux (7) supporté par ladite membrane (2), ledit corps de soupape ayant un passage de pression négative (17) et un orifice d'entrée (19) pour l'air comprimé,
un plongeur (21) adapté de manière coulissante dans un perçage (9a) dudit corps de soupape par au moins une paire d'éléments d'étanchéité (20a, 20b) de façon à se déplacer en réponse au déplacement d'un arbre d'entrée (22), lesdits éléments d'étanchéité étant espacés axialement l'un de l'autre et disposés sur les côtés opposés dudit orifice d'entrée (19) pour l'air comprimé, et
une soupape (28) actionnable en réponse au déplacement dudit plongeur afin d'introduire de l'air comprimé dans ladite chambre de pression de travail (4) à partir dudit orifice d'entrée (19) pour l'air comprimé pour produire une pression différentielle entre ladite chambre de pression de travail (4) et ladite chambre de pression négative (3) en émettant ainsi une poussée amplifiée à travers ledit corps de soupape (7),
caractérisé en ce que le perçage dudit corps de soupape a un diamètre uniforme sur au moins une partie de celui-ci où ledit plongeur coulisse ; et une rainure (45) est ménagée dans une surface interne du perçage dudit corps de soupape (7), ladite rainure incluant au moins ledit orifice d'entrée (19) pour l'air comprimé.

2. Amplificateur pneumatique comportant :
un boîtier (1),
une membrane (2) divisant l'intérieur dudit boîtier en une chambre de pression négative et une chambre de pression de travail (4),
un corps de soupape creux (7) supporté par ladite membrane (2), ledit corps de soupape (7) ayant un passage de pression négative (17) et un orifice d'entrée (19) pour l'air comprimé,
un plongeur (21) adapté de manière coulissante dans un perçage (9a) dudit corps de soupape par au moins une paire d'éléments d'étanchéité (20a, 20b) de façon à se déplacer en réponse au déplacement d'un arbre d'entrée (22), lesdits éléments d'étanchéité étant espacés axialement l'un de l'autre et disposés sur les côtés opposés dudit orifice d'entrée (19) pour l'air comprimé, et
une soupape (28) actionnable en réponse au déplacement dudit plongeur pour introduire de l'air comprimé dans ladite chambre de pression de travail (4) à partir dudit orifice d'entrée (19) pour l'air comprimé de façon à produire une pression différentielle entre ladite chambre de pression de travail (4) et ladite chambre de pression négative (3) en émettant ainsi une poussée amplifiée à travers ledit corps de soupape (7),
caractérisé en ce que ledit corps de soupape (7) est agencé de telle sorte qu'au moins une partie du perçage (9a) où ledit plongeur coulisse soit constituée d'une portion de perçage avant (46) d'un diamètre relativement petit et d'une portion de perçage arrière (47) d'un diamètre relativement grand de telle sorte que la frontière entre ladite portion de perçage de petit diamètre et ladite portion de perçage de grand diamètre se situe légèrement à l'avant dudit orifice d'entrée (19) pour l'air comprimé ; et
un manchon (49) est adapté dans ladite portion de perçage de grand diamètre (47), ledit manchon ayant un diamètre interne égal au diamètre de ladite portion de perçage de petit diamètre, ledit manchon ayant en outre un trou traversant (50) apte à communiquer avec ledit orifice d'entrée (19) pour l'air comprimé.

3. Amplificateur pneumatique selon la revendication 1 ou la revendication 2, caractérisé en ce que ledit plongeur a un passage d'air comprimé qui peut communiquer avec ladite chambre de pression de travail à travers ladite soupape et qui a une ouverture d'extrémité à un endroit entre lesdits éléments d'étanchéité.
